# EUROPÄISCHE PATENTANMELDUNG

(11) **EP 1 287 932 A1**
(43) Veröffentlichungstag der Anmeldung: **05.03.2003**
(21) Anmeldenummer: 02019360.3
(22) Anmeldetag: 29.08.2002
(51) Int. Cl.: B23G 1/34

(54) **Wirbelring**

(30) Priorität: 04.09.2001 DE 10143299
(71) Anmelder: Leistritz Produktionstechnik GmbH, 90459 Nürnberg (DE)
(72) Erfinder: Moser, Werner, Dr., 90530 Wendelstein (DE); Richter, Helmut, 90587 Obermichelbach (DE); Klein, Jürgen, 90547 Stein (DE)
(74) Vertreter: Matschkur, Lindner Blaumeier Patent- und Rechtsanwälte

(57) **Zusammenfassung**

Wirbelring zum Wirbeln bzw. Schälen von Außengewinden, Schnecken und Profilen mit mehreren äquidistant über den Umfang verteilten Spannaufnahmen für auswechselbar gehalterte plattenförmige Hartmetall-Schälwerkzeuge, der aus einem zur Befestigung auf einer Wirbelmaschine dienenden Konusring, einem als Schlitze ausgebildete Haltetaschen zur Aufnahme der Schälwerkzeuge und deren Spannelementen aufweisenden, in einer nach innen offenen Ringnut des Konusrings angeordneten, Zwischenring und einem mit dem Konusring verschraubbaren, die Schälwerkzeuge gegen den Konusring verspannenden Deckring besteht, wobei die Schälwerkzeuge als langgestreckte, vielfach nachschleifbare stabförmige Hartmetallkörper, vorzugsweise mit einer aufdiffundierten CBN-Schicht, ausgebildet sind, deren der CBN-Schicht gegenüberliegende Schnittdruckabstützfläche von der seitlichen Anlagewand der Haltetasche bis zum radial inneren Ende abgestützt ist und die durch Gewindestifte oder dergleichen radial anstellbar sind.

## Beschreibung

Die Erfindung bezieht sich auf einen Wirbelring zum Wirbeln bzw. Schälen von Außengewinden, Schnecken und Profilen mit mehreren äquidistant über den Umfang verteilten Spannaufnahmen für auswechselbar gehalterte plattenförmige Hartmetall-Schälwerkzeuge, der aus einem zur Befestigung auf einer Wirbelmaschine dienenden Konusring, einem als Schlitze ausgebildete Haltetaschen zur Aufnahme der Schälwerkzeuge und der Spannelemente aufweisenden, in einer nach innen offenen Ringnut des Konusrings angeordneten Zwischenring und einem, mit dem Konusring verschraubbaren, die Schälwerkzeuge gegen den Konusring verspannenden Deckring besteht.

Ein derartiger, aus der DE 198 19 815 C1 bekannt gewordener Wirbelring hat wegen der fehlenden Einzelverklemmung der Hartmetall-Schälwerkzeuge einen geringeren Bauaufwand und ermöglicht es auf dem Innenumfang des Wirbelrings eine feste Anzahl von Schälwerkzeugen unterzubringen. Der Erfindung liegt dabei die Aufgabe zugrunde einen solchen Wirbelring dahingehend zu verbessern, dass bei höherer Standzeit und besserer Werkzeugauslastung eine noch größere Anzahl von Schälwerkzeugen auf dem Innenumfang des Wirbelrings unterbringbar und noch genauer positionierbar sind.

Zur Lösung dieser Aufgabe ist erfindungsgemäß vorgesehen, dass die Schälwerkzeuge als langgestreckte, vielfach nachschleifbare stabförmige Hartmetallkörper, vorzugsweise mit einer aufdiffundierten CBN-Schicht, ausgebildet sind, deren der CBN-Schicht gegenüberliegende Schnittdruckabstützfläche von der seitlichen Anlagewand der Haltetasche bis zum radial inneren Ende abgestützt ist, und die durch Gewindestifte oder dergleichen radial anstellbar sind.

Durch die erfindungsgemäße Ausbildung, bei der durch die Unterstützung des Schälwerkzeugs über die gesamte Schnittdruckabstützfläche sehr niedrig bauende Schälwerkzeuge mit einer Höhe von nur ca. 2 - 5 mm einsetzbar sind, ergibt sich die Möglichkeit erheblich mehr Schälwerkzeuge über den Umfang verteilt anzuordnen. Die langgestreckte Ausbildung der Hartmetallkörper der Schälwerkzeuge in Verbindung mit einer nahezu vollflächigen Beschichtung mit CBN lässt es zu, dass solche Schälwerkzeuge bis zu zwanzig Mal und mehr nachgeschliffen werden können, wodurch sich die Werkzeugkosten ersichtlich sehr stark verringern.

Neben einer einfachen quaderförmigen Ausbildung der Schälwerkzeuge kann dabei auch vorgesehen sein, dass die Schnittdruckabstützfläche des Hartmetallkörpers dachkantartig ausgebildet ist, und dass die Anlagewand der Halteteile einer Dachkantteilfläche parallel anliegend geneigt ausgebildet ist. Diese Ausbildung ermöglicht den Einsatz von CBN beschichteten Hartmetall-Schälwerkzeugen, die auch für einen in einer parallelen Patentanmeldung beschriebenen Wirbelkopf einsetzbar sind. Hierdurch verringern sich ersichtlich die Kosten für die Lagerhaltung unterschiedlicher Hartmetall-Schälwerkzeuge.

Obgleich selbstverständlich auch Exzenter zum Spannen der Schälwerkzeuge eingesetzt werden können, hat es sich in Ausgestaltung der Erfindung als besonders zweckmäßig erwiesen, das Schälwerkzeug durch einen zur Wirbelebene geneigten, in die Konusplatte einschraubbaren Zugbolzen mit einem Keilkopf an die seitliche Anlagewand der Haltetasche anzudrücken, wobei bevorzugt der Keilkopf ein mit einer Keilabflachung versehener Zylinderkopf ist, dessen schräg geneigte Aufnahmedurchbrechung im Zwischenring zur Haltetasche hin offen ist.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine teilweise aufgebrochene perspektivische Ansicht eines erfindungsgemäßen Wirbelrings,

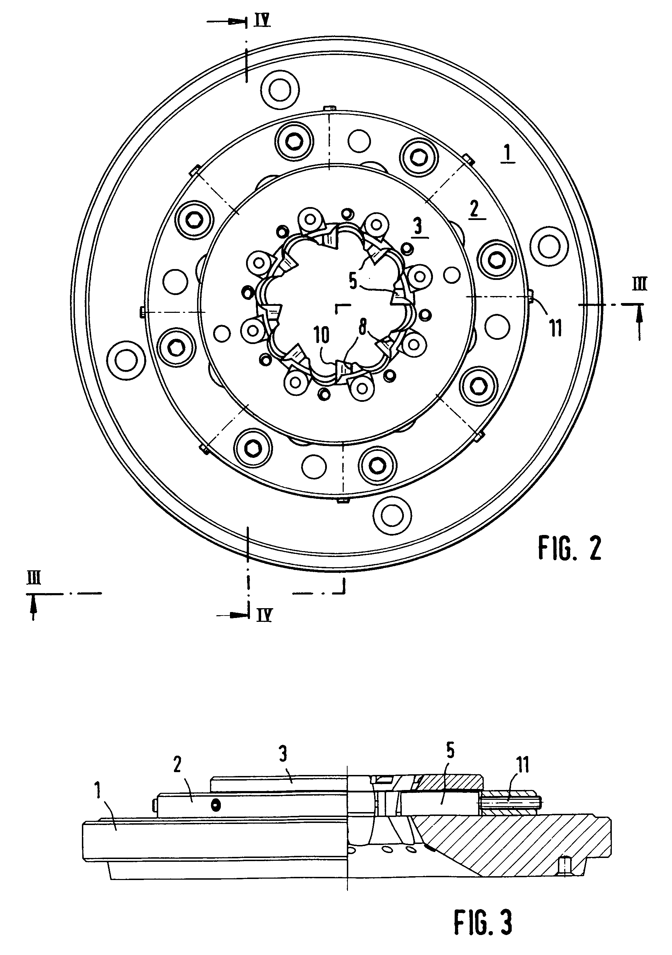

- Fig. 2: eine Draufsicht auf den Wirbelring nach Fig. 1,
- Fig. 3: einen abgewinkelten Schnitt längs der Linie III - III in Fig. 2,
- Fig. 4: einen Schnitt längs der Linie IV - IV in Fig. 2,
- Fig. 5: einen der Fig. 4 entsprechenden Schnitt bei einer anderen Ausführungsform der Schälwerkzeuge und
- Fig. 6 u. 7: Ausschnittsvergrößerungen VI und VII der Schnitte in den Fig. 4 und 5

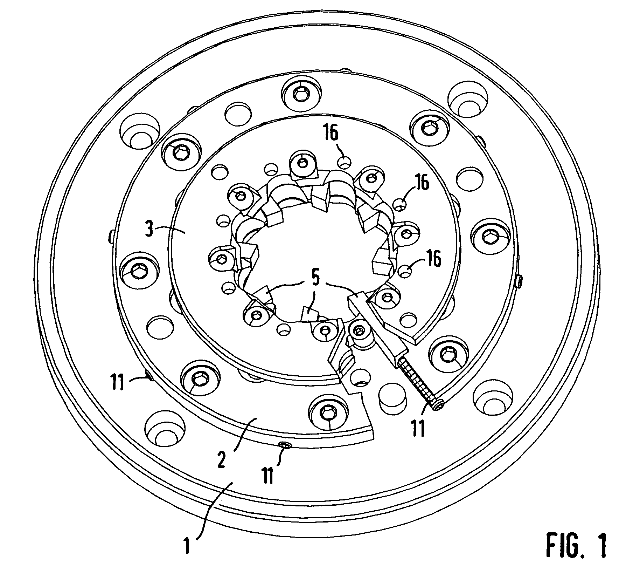

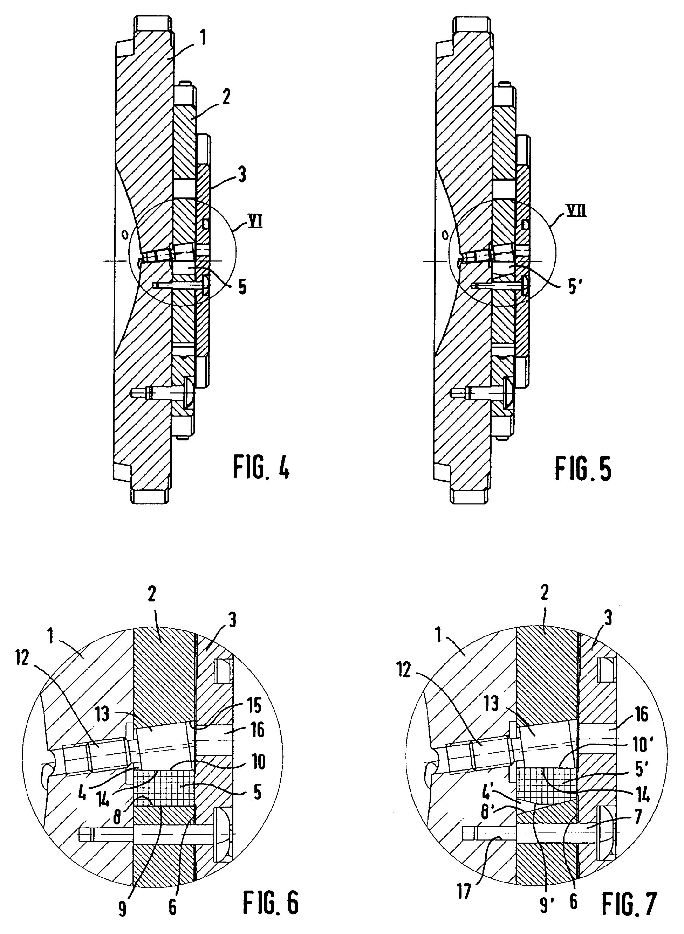

Der erfindungsgemäße Wirbelring besteht aus einem auf der Wirbelmaschine aufzuspannenden Konusring 1, einem darauf angeordneten Zwischenring 2 und einem Deckring 3, der die in als Schlitze ausgebildeten Haltetaschen 4 angeordneten Schälwerkzeuge 5, 5' gegen den Konusring 1 verspannt. Dies erkennt man besonders gut in den Fig. 6 und 7, wo man auch erkennen kann, dass der Deckring mit Aussparungen 6 geringer Tiefe versehen ist, so dass er abseits der Anlagestellen auf den Schälwerkzeugen 5, 5' frei liegt und somit in jedem Fall ein Verspannen der Vielzahl der über den Umfang verteilt angeordneten Schälwerkzeuge 5, 5' gesichert ist. Zum Verspannen des Deckrings 3 dienen Schrauben 7, die in Gewindesackbohrungen 17 des Konusrings 1 eingreifen. Die Haltetaschen 4 sind dabei so ausgebildet, dass die Anlagewand 8 für das jeweilige Schälwerkzeug 5, 5' die gesamte Schnittdruckabstützfläche 9, 9' bis zum radial innen liegenden Ende abstützt. Das Schälwerkzeug 5, 5' ragt also nicht über die Anlagewand nach vorne über, wodurch es möglich ist die Höhe zwischen der Hauptschnittdruckabstützfläche und der Schnittfläche 10 sehr gering, im Bereich von beispielsweise 2 - 5 mm, zu halten, ohne dass auch bei hohen Schnittkräften eine Bruchgefahr gegeben wäre. Die Schnittfläche 10 ist vollflächig mit CBN beschichtet und der Hartmetallgrundkörper der Schälwerkzeuge 5, 5' ist, wie man insbesondere aus Fig. 1 erkennen kann sehr langgestreckt ausgebildet, so dass ein solches Schälwerkzeug, in Verbindung mit einer als Gewindestift 11 ausgebildeten radialen Anstellvorrichtung ohne weiteres zwanzig mal nachgeschliffen werden kann. Dies senkt die Werkzeugkosten beim Einsatz eines solchen Wirbelrings ganz beträchtlich. Zum Andrücken der Hauptschnittdruckabstützfläche 9, 9' der Schälwerkzeuge 5, 5' an die Anlagewand 8, 8' der Haltetasche 4 des Zwischenrings 2 besteht in den beiden dargestellten Ausführungsformen aus einem Zugbolzen 12, der geneigt in den Konusring 1 einschraubbar ist, wobei sein zylindrischer Kopf 13 mit einer Keilabflachung 14 versehen ist. Die ebenfalls schräg geneigte Aufnahmedurchbrechung 15 des Zwischenrings 2 ist zur Haltetasche 4 hin offen, so dass sich die Keilabflachung 14 des Kopfs 13 des Spannbolzens 12 an die Schnittfläche 10, 10' des Schälwerkzeugs 5, 5' spannend anlegen kann.

Beim Ausführungsbeispiel nach Fig. 5 und 7 ist das Schälwerkzeug 5' mit einer dachkantartig geneigten Hauptschnittdruckabstützfläche 9' versehen, so dass dementsprechend auch die seitliche Anlagewand 8' der Haltetasche 4' zum parallelen Anliegen an der einen Dachkantteilfläche schräg geneigt ausgebildet ist.

Die Zugbolzen 12 zum Verspannen der Schälwerkzeuge 5, 5' lassen sich durch Bohrungen 16 des Deckrings 3 von oben bedienen, während die Gewindestifte 11 radial von der Außenseite des Zwischenrings her zugänglich sind.

## Patentansprüche

1. Wirbelring zum Wirbeln bzw. Schälen von Außengewinden, Schnecken und Profilen mit mehreren äquidistant über den Umfang verteilten Spannaufnahmen für auswechselbar gehalterte plattenförmige Hartmetall-Schälwerkzeuge, der aus einem zur Befestigung auf einer Wirbelmaschine dienenden Konusring, einem als Schlitze ausgebildete Haltetaschen zur Aufnahme der Schälwerkzeuge und deren Spannelementen aufweisenden, in einer nach innen offenen Ringnut des Konusrings angeordneten, Zwischenring und einem mit dem Konusring verschraubbaren, die Schälwerkzeuge (5, 5') gegen den Konusring (1) verspannenden Deckring (3) besteht, **dadurch gekennzeichnet, dass** die Schälwerkzeuge (5, 5') als langgestreckte, vielfach nachschleifbare stabförmige Hartmetallkörper, vorzugsweise mit einer aufdiffundierten CBN-Schicht, ausgebildet sind, deren der CBN-Schicht gegenüberliegende Schnittdruckabstützfläche (9, 9') von der seitlichen Anlagewand (8) der Haltetasche (4, 4') bis zum radial inneren Ende abgestützt ist und die durch Gewindestifte (11) oder dergleichen radial anstellbar sind.

2. Wirbelring nach Anspruch 1, **dadurch gekennzeichnet, dass** die Schnittdruckabstützfläche (9') des Hartmetallkörpers dachkantartig ausgebildet ist, und dass die Anlagewand (8) der Haltetasche (4') einer der Dachkantteilflächen parallel anliegend geneigt ausgebildet ist.

3. Wirbelring nach Anspruch 1 oder 2, **dadurch gekennzeichnet, dass** das Schälwerkzeug (5, 5') durch einen zur Wirbelebene geneigten in die Konusplatte (1) einschraubbaren Zugbolzen (12) mit einem Keilkopf (15) an die seitliche Anlagewand (8, 8') der Haltetasche (4, 4') andrückbar ist.

4. Wirbelring nach Anspruch 3, **dadurch gekennzeichnet, dass** der Keilkopf (13) ein mit einer Keil-Abflachung (14) versehener Zylinderkopf ist, dessen schräg geneigte Aufnahmedurchbrechung (15) im Zwischenring (2) zur Haltetasche (4, 4') hin offen ist.

5. Wirbelring nach einem der Ansprüche 1 bis 4, **dadurch gekennzeichnet, dass** das Schälwerkzeug (5, 5') eine Höhe von 2 - 5 mm besitzt, wobei die Schnittfläche im Wesentlichen vollständig mit CBN beschichtet ist.
